# EUROPÄISCHE PATENTSCHRIFT

(11) **EP 1 751 444 B1**
(45) Veröffentlichungstag und Bekanntmachung des Hinweises auf die Patenterteilung: **03.09.2008**
(21) Anmeldenummer: 05752882.0
(22) Anmeldetag: 01.06.2005
(51) Int. Cl.: F16D 25/10, F16D 25/12, F16D 21/06, F16D 25/0638

(54) **KUPPLUNGSEINRICHTUNG , INSBESONDERE DOPPELKUPPLUNGSEINRICHTUNG, MIT EINER EINRICHTUNG ZUR AXIALEN POSITIONIERUNG DER KUPPLUNGSEINRICHTUNG**
CLUTCH DEVICE, IN PARTICULAR DOUBLE CLUTCH DEVICE, WITH A DEVICE FOR AXIALLY POSITIONING THE CLUTCH DEVICE
SYSTEME D' EMBRAYAGE, EN PARTICULIER SYSTEME D'EMBRAYAGE DOUBLE, AVEC UN DISPOSITIF DE POSITIONNEMENT AXIAL DU SYSTEME D'EMBRAYAGE

(30) Priorität: 03.06.2004 EP 04013095
(43) Veröffentlichungstag der Anmeldung: 14.02.2007
(73) Patentinhaber: Borgwarner, Inc., Auburn Hills, MI 48326-2872 (US)
(72) Erfinder: GOLD, Eckart, 68766 Hockenheim (DE); HEINRICH, Johannes, 61381 Friedrichsdorf (DE); HERTEL, Marcus, 68169 Mannheim (DE); GERLACH, Martin, 68526 Ladenburg (DE); NICKLAS, Götz, 67346 Speyer (DE); HAUCK, Hans-Jürgen, 74523 Schwäbisch Hall (DE); HENZE, Jens, 37127 Scheden (DE)
(74) Vertreter: Patentanwälte Westphal, Mussgnug & Partner
(86) Internationale Anmeldenummer: PCT/EP2005/005856
(87) Internationale Veröffentlichungsnummer: WO 2005/119080

(56) Entgegenhaltungen:
- EP-A- 1 052 421
- GB-A- 465 612
- GB-A- 812 784

## Beschreibung

Die Erfindung betrifft Kupplungseinrichtung, insbesondere Doppelkapplungseinrichtung mit einer Einrichtung zur axialen Positionierung der Kupplungseinrichtung, insbesondere Doppelkupplungseinrichtung, an einer Drehdurchführung nach dem Oberbegriff des Patentanspruchs 1.

Kupplungseiririchtungen sind aus dem Stand der Technik in einer Vielzahl von Abwandlungen bekannt. Um ein axiales Anlaufen der Kupplungseinrichtung an benachbarte Teile auszuschließen muss diese axial definiert positioniert werden.

Aus der DE 199 21 687 A1, von der die Erfindung ausgeht, ist eine Doppelkupplung in radial geschachtelter Bauart mit einer zwei Außenlamellenträger tragenden Kupplungsnabe bekannt, welche an einer stehenden Drehdurchführung um eine Drehachse drehbar gelagert ist. Die Kupplungsnabe stützt sich zum Getriebe hin gegen die stehende Drehdurchführung ab. In Richtung zur Motorseite ist die Kupplungsnabe selbst nicht an der Drehdurchführung abgestützt. Die Doppelkupplung wird dadurch axial positioniert, dass eine Nabe des Innenlamellenträgers der radial äußeren Kupplung mittels eines Sprengrings an einer Getriebeeingangswelle zum Motor hin abgestützt ist. Ausführungen ohne stehende Drehdurchführung und mit axialer Positionierung der jeweiligen Kupplungsanordnung durch Abstützung an einer Getriebeeingangswelle sind auch aus der EP 1 226 992 A1 bekannt.

Obwohl sich eine derartige axiale Positionierung dem Grunde nach bewährt hat, tritt bei den oben angegebenen Ausführungsvarianten das Problem auf, dass sich Längenschwankungen der Getriebewellen durch Toleranzen, thermische Ausdehnung im Betrieb etc. aufgrund der sich daraus ergebenden großen axialen Toleranzen negativ auf den Betrieb der Kupplung auswirkt. Insbesondere können sich -wie bereits aus der EP 1 226 992 A1 bekannt ist- teilweise erhebliche Belastungen für die stützenden bzw. gestützten Teile ergeben. Eine alternative Positionierungsmöglichkeit ist in GB 465,612 für eine Welle für ein Getriebe eines Luftkompressors eines Flugzeugtriebwerks beschrieben.

Die Aufgabe der Erfindung besteht nunmehr darin, eine Kupplungseinrichtung der gattungsgemäßen Art derart auszuführen und weiterzubilden, dass sich axiale Toleranzen der Getriebeeingangswellen nicht mehr in diesem Maße negativ auf das Betriebsverhalten der Kupplungseinrichtung auswirken können, wobei gleichzeitig die Kupplungseinrichtung auf verschiedene Arten montierbar sein soll, sodass sie in flexibler Weise verwendet werden kann.

Diese Aufgabe wird durch eine Kupplungseinrichtung, insbesondere Doppelkupplungseinrichtung, mit den Merkmalen des Patentanspruchs 1 gelöst.

Vorteilhafte Ausführungen und Weiterbildungen der Erfindung sind in den Unteransprüchen angegeben.

Die Erfindung basiert auf der Idee, in Verbindung mit einer (vorzugsweise stehenden) Drehdurchführung eine Positionierungsmöglichkeit mit der Kupplungseinrichtung unabhängig von den Getriebeeingangswellen zu finden. Die Lösung besteht in einer koaxial mit der Drehdurchführung verschraubten Festhaltemutter, an welcher die Bestandteile der Kupplungseinrichtung mittelbar oder unmittelbar in axialer Richtung vorzugsweise im Wesentlichen unverschiebbar abgestützt sind. Diese Festhaltemutter sorgt für die axiale Positionierung der diese Festhaltemutter beidseitig umgreifenden Kupplungseinrichtung.

Um eine reibungsarme Relativbewegung gegeneinander drehbarer Kupplungsbestandteile zu gewährleisten, ist erfindungsgemäß vorgesehen, dass die Festhaltemutter eine Anlagefläche aufweist, an welcher ein Gleitlager, insbesondere eine Axialnadellager und/oder eine Anlaufscheibe, axial abgestützt ist. Korrespondierend hierzu weist die Kupplungsnabe vorzugsweise selbst eine Anlagefläche auf, an welcher das Gleitlager, insbesondere das Axialnadellager und/oder die Anlaufscheibe, axial andersseitig abgestützt ist. Auch andere eine Relativdrehung zu der Kupplungsnabe bzw. der Festhaltemutter ausführende Bestandteile der Kupplungseinrichtung, insbesondere Lamellenträger oder mit diesen drehfest verbundene Komponenten oder ein Kupplungsgehäuse, können eine Anlagefläche aufweisen, an welcher das Gleitlager, insbesondere das Axialnadellager und/oder die Anlaufscheibe, axial andersseitig abgestützt ist.

Es ist vorgesehen, dass die Festhaltemutter bereits während der Kupplungsmontage mit der Drehdurchführung gekoppelt wird. Die auf diese Weise vorfertigbare Kupplungseinrichtung kann dann in der Art eines Moduls mit dem Getriebe verbunden werden.

Sollte eine Kopplung der Kupplungseinrichtung mit der Drehdurchführung während der Getriebemontage anvisiert werden, d. h. die Kupplung mit der Drehdurchführung verbunden werden, nachdem die Drehdurchführung bereits ins Getriebe eingebaut wurde, so ist in einer besonders vorteilhaften Ausführungsvariante der Erfindung vorgesehen, dass die Festhaltemutter eine Mitnahmekontur aufweist, die durch entsprechende Aussparungen in umliegenden Kupplungskomponenten von außen zugänglich ist und welche eine Montage oder Demontage der Kupplungseinrichtung ermöglicht.

Die Drehdurchführung kann neben der die gesamte Kupplungseinrichtung tragenden Funktion auch als Zu- und/oder Abführeinrichtung für zum Betrieb der Kupplungseinrichtung erforderliches Fluid, vorzugsweise (Hydraulik-) Flüssigkeit, dienen. Erfindungsgemäß ist daher vorgesehen, dass die Drehdurchführung mindestens einen Fluidkanal aufweist, über den ein zur Kupplungskühlung, zur Kupplungsbetätigung und/oder in sonstiger Weise für den Betrieb der Kupplungseinrichtung erforderliches Fluid, insbesondere Kühlöl, Drucköl, Fliehöl, zu- und/oder abführbar ist.

Die Erfindung wird nunmehr anhand der Zeichnungen näher beschrieben. Es zeigen:
- Figur 1:: einen Antriebsstrang mit einer Doppelkupplung im Axialhalbschnitt, bei der ein erstes Ausführungsbeispiel einer erfindungsgemäßen Axialsicherungseinrichtung vorgesehen ist,
- Figur 2:: einen weiteren Antriebsstrang mit einer Doppelkupplung im Axialhalbschnitt, bei der ein zweites Ausführungsbeispiel einer erfindungsgemäßen Axialsicherungseinrichtung vorgesehen ist,
- Figur 3:: eine Festhaltemutter gemäß der Erfindung, wie sie zur axialen Abstützung einer Doppelkupplung nach den Figuren 1 und 2 eingesetzt ist.

Gleiche und funktionsgleiche Bestandteile sind in beiden Figuren mit identischen Bezugszeichen versehen.

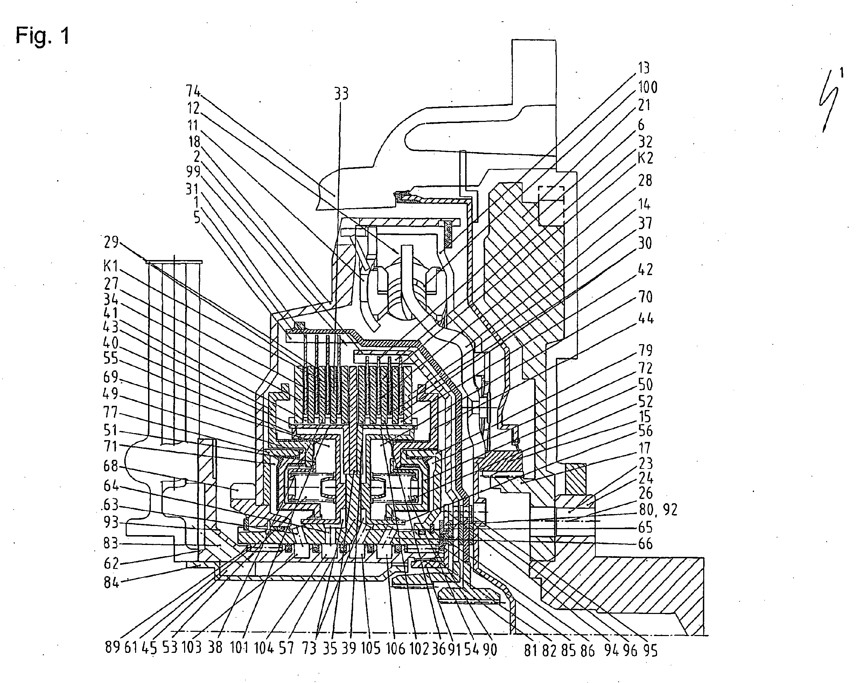

Die Figur 1 verdeutlicht anhand eines Ausschnittes aus einem beispielhaft gewählten Antriebsstrang für ein Kraftfahrzeug einen möglichen-Grundaufbau und die Funktionsweise einer erfindungsgemäß gestalteten Einrichtung zur axialen Sicherung einer Doppelkupplung 99 an einer Drehdurchführung 62.

Auf der rechten Seite der Zeichnungsfigur ist eine um eine Drehachse ax drehbare und als Antriebswelle dienende Kurbelwelle 24 angedeutet, welche beispielsweise mit einer Verbrennungskraftmaschine, einem Motor M oder dergleichen gekoppelt ist. Diese Seite stellt die Antriebsseite des Antriebsstrangs dar. Auf der linken Seite des Zeichnungsblattes sind zwei um die Drehachse ax drehbare Getriebeeingangswellen, nämlich eine Zentral- oder Vollwelle 10 und eine Hohlwelle 9 zu sehen, welche mit einem hier nicht dargestellten Getriebe G oder dergleichen gekoppelt sind. So kann beispielsweise die erste Getriebeeingangswelle (Zentral- oder Vollwelle 10) zum Betrieb aller ungeraden Gänge (z. B. 1, 3, 5 ...) und die zweite Getriebeeingangswelle (Hohlwelle 9) zum Betrieb aller geraden Gänge (z. B. 2, 4, 6 ...) des Kraftfahrzeugs vorgesehen sein. Der Rückwärtsgang könnte sowohl der ersten Getriebeeingangswelle (Zentral- oder Vollwelle 10), als auch der zweiten Getriebeeingangswelle (Vollwelle 9) des Getriebes G zugeordnet sein. Diese Seite stellt die Abtriebsseite des Antriebsstrangs dar.

Der Antriebsstrang umfasst ferner eine Schwungmasse 21, einen Torsionsschwingungsdämpfer 12 sowie die vorstehend genannte Doppelkupplung 99, mittels der die Abtriebswellen 9, 10 schaltbar mit der Antriebswelle 24 verbindbar sind.

Der Torsionsschwingungsdämpfer 12, die Doppelkupplung 99 sowie die Schwungmasse 21 werden von einem äußeren Gehäuse, der sogenannten Kupplungsglocke 74 umschlossen.

Der Dreh- oder Torsionsschwingungsdämpfer 12 ist in an sich bekannter Art und Weise ausgebildet. Eingangsseitig weist er ein Primärelement 14 in Form einer Halbschale auf. Ausgangsseitig ist ein Sekundärelement bestehend aus einer ersten Halbschale 13 und einer zweiten Halbschale 11 vorgesehen. Primärelement 14 und Sekundärelement 13, 11 sind um die Drehachse ax gegeneinander drehbar und über eine Mehrzahl von an einem Außenumfang des Drehschwingungsdämpfers 12 angeordnete Federpakete 100 gekoppelt.

Die Doppelkupplung 99 umfasst zwei einzelne Kupplungen K1, K2. Jede Kupplung K1, K2 umfasst jeweils einen Außenlamellenträger 1, 2 und einen gemeinsamen Innenlamellenträger 40. Der Außenlamellenträger der ersten Kupplung K1 wird nachfolgend als erster Außenlamellenträger 1, der Außenlamellenträger der zweiten Kupplung K2 wird im Folgenden als zweiter Außenlamellenträger 2 bezeichnet.

Die beiden Außenlamellenträger 1, 2 sind halbschalenförmig ausgebildet, wobei der erste Außenlamellenträger 1 den zweiten Außenlamellenträger 2 in axialer Richtung überragend umgreift. Der Innenlamellenträger 40 umfasst zwei Halbschalen 101, 102, welche rückseitig miteinander verbunden sind. Die zylinderförmigen Abschnitte der Halbschalen 101, 102 erstrecken sich jeweils über die axial verlaufenden Bereiche der halbschalenförmigen Außenlamellenträger 1, 2.

Die beiden Außenlamellenträger 1, 2 weisen Innenverzahnungen 5, 6 auf, welche zur axial verschieblichen aber im Wesentlichen drehfesten Führung von im vorliegenden Fall jeweils vier entsprechende Außenverzahnungen 31, 32 aufweisenden Lamellen 29, 30 dienen. Letztere werden üblicherweise auch als Außenlamellen 29, 30 bezeichnet. In entsprechender Weise sind am Außenumfang der den jeweiligen Außenlamellenträgern 1, 2 zugeordneten Innenlamellenträgerabschnitten des gemeinsamen Innenlamellenträgers 40 Außenverzahnungen 41, 42 angeordnet, in denen Innenverzahnungen 38, 39 aufweisende Lamellen, die sogenannten Innenlamellen 36, axial verschieblich aber drehfest geführt sind. Die Rückseiten der die beiden die Innenlamellenträgerabschnitte bildenden Halbschalen 101, 102 stützen sich gegen eine gemeinsame Endplatte 35 ab. An den beiden äußeren Enden des gemeinsamen Innenlamellenträgers 40 sind jeweils Druckplatten 34, 37 in gleicher Weise wie die vorstehend genannten Innenlamellen 36 axial verschieblich aber im Wesentlichen drehfest geführt.

Die äußeren Lamellen/Außenlamellen 29, 30, die inneren Lamellen/Innenlamellen 33, 36 sowie die beiden Druckplatten 34, 37 und die gemeinsame Endplatte 35 greifen wechselseitig in an sich bekannter Weise jeweils ein einer Kupplung K1, K2 zugeordnetes Lamellenpaket 27, 28 bildend ineinander.

Die beiden Lamellenpakete 27, 28 mit den entsprechenden Lamellen 29, 30, 33, 34, 35, 36, 37 sind somit auf dem gemeinsamen Innenlamellenträger 40 in axialer Richtung hintereinanderliegend angeordnet. Im vorliegenden Ausführungsbeispiel sind die Reibflächen aller Lamellen 29, 30, 33, 34, 35, 36, 37 im Wesentlichen gleich groß, sodass die einzelnen Kupplungen K1, K2 eine gleichwertige Leistungsfähigkeit aufweisen. Selbstverständlich ist es auch möglich, dass die Reibflächen der Lamellen 29, 30, 33, 34, 35, 36, 37 verschieden große Außen- und/oder Innendurchmesser aufweisen.

Bestandteile der Kupplungen K1, K2 sind ferner nachfolgend im Detail beschriebene Kolben-/Zylinder-Einheiten, welche zur Betätigung der Kupplungen K1, K2 dienen. Insbesondere ist jeder Kupplung K1, K2 ein hydraulisch betätigbarer Betätigungskolben 43, 44 zugeordnet. Jeder dieser Betätigungskolben 43, 44 kann gegen eine der Druckplatten 34, 37 kraftübertragend und Reibschluss zwischen den einzelnen Lamellen 29, 30, 33, 34, 35, 36, 37 erzeugend und damit die jeweilige Kupplung K1, K2 betätigend gedrückt werden. Beide Kupplungen K1, K2 werden nach innen gerichtet betätigt, wobei die Reaktionskräfte gegen die gemeinsame Endplatte 35 wirken.

Die Betätigungseinrichtungen für die beiden Kupplungen K1, K2 umfassen neben den vorerwähnten Betätigungskolben 43, 44, mittels derer die jeweiligen Druckplatten 34, 37 der Lamellenpakete 27, 28 in Richtung der gemeinsamen Endplatten 35 verschoben werden können, jeweils einen Zylinder 77, 79, einen Druckkolben 49, 50, einen Kolben 51, 52, einen Ausgleichskolben 55, 56 sowie eine Mehrzahl in Umfangsrichtung angeordneter Schraubenfedern 53, 54. Die jeweiligen Betätigungskolben 43, 44 stützen sich nach außen gegen die jeweiligen Druckkolben 49, 50 ab, welche axial verschieblich an den Zylindern 77, 79 und am Außenumfang einer Kupplungsnabe 61 geführt sind. Nach innen gerichtet stützen sich die Betätigungskolben 43, 44 gegen die Kolben 51, 52 ab. Diese wiederum stützen sich nach innen gerichtet gegen die Schraubenfedern 53, 54 ab. Die Schraubenfedern 53, 54 sind nach innen gerichtet gegen die Außenflächen der Kompensationskolben 55, 56 abgestützt. Diese Kompensationskolben 55, 56 stützen sich gegen einen den gemeinsamen Innenlamellenträger 40 tragenden Umfangssteg 57 der Kupplungsnabe 61 ab.

Obwohl die gesamte Kupplungseinrichtung bestehend aus den Beiden Einzelkupplungen K1 und K2 unmittelbar auf der zweiten Getriebeeingangswelle (Hohlwelle 9) gelagert werden könnte, ist bei der vorliegenden Ausführungsform eine separate Drehdurchführung 62 vorgesehen, welche die beiden Getriebeeingangswellen, die Hohlwelle 9 und die Vollwelle 10, koaxial umgreift und auf welchem die Kupplungsnabe 61 mittels zweier Radial-Nadellager 89, 90 drehbar gelagert ist.

Die Drehdurchführung 62 kann einteilig oder sowohl axial als auch radial mehrteilig ausgeführt sein. Im vorliegenden Fall ist die Drehdurchführung 62 zweiteilig ausgeführt. Sie besteht aus einem Mantel 83 und einer von diesem umschlossenen Buchse 84. Der Außenumfang der zylindermantelförmigen Buchse 84 weist vier in axialer Richtung verlaufende, unterschiedlich lange Längsnuten 45 auf. Der Mantel 83 weist korrespondierend zur Anordnung der vorerwähnten Längsnuten 45 vier in Umfangsrichtung verlaufende Nuten 103, 104, 105, 106 auf. Diese Umfangsnuten 103, 104, 105, 106 sind über (hier nicht dargestellte) radial verlaufende Öffnungen mit den entsprechenden Längsnuten 45 verbunden.

Korrespondierend zu den Umfangsnuten 103, 104, 105, 106 weist die Kupplungsnabe 61 vier im Wesentlichen radial und zum Teil axial geneigt verlaufende Öffnungen auf, welche nachfolgend als Hydraulikflüssigkeitskanäle 63, 64, 65 und 66 bezeichnet sind.

Über die Nuten 45 in der Buchse 84, die Öffnungen und Nuten 103, 104, 105, 106 im Mantel 83 und die Hydraulikflüssigkeitskanäle 63, 64, 65, 66 in der Kupplungsnabe 61 erfolgt eine Versorgung der durch die Kolben 43, 44, 49, 50, 55, 56 gebildeten Volumina (erster Druckraum 71, zweiter Druckraum 72, erster Ausgleichsraum 69, zweiter Ausgleichsraum 70, Kühlflüssigkeitsraum 73 mit Hydraulikflüssigkeit:

Über den ersten Hydraulikflüssigkeitskanal 63 kann der erste Druckraum 71 mit Hydraulikflüssigkeit druckbeaufschlagt werden. Dieser Hydraulikflüssigkeitsdruck drückt den Druckkolben 49 und damit den Betätigungskolben 45 und den Kolben 51 entgegen dem Druck der Schraubenfedern 53 nach innen. Eine derartige Verschiebung des Betätigungskolbens 45 hat zur Folge, dass dessen Außenumfang gegen die Druckplatte 34 der ersten Kupplung K1 diese betätigend gedrückt wird.

In gleicher Weise kann über den vierten Hydraulikflüssigkeitskanal 66 der zweite Druckraum 72 mit Hydraulikflüssigkeit druckbeaufschlagt werden. Auf Grund dieses Hydraulikflüssigkeitsdrucks wird der Druckkolben 50 und damit der Betätigungskolben 44 und der Kolben 52 entgegen dem Druck der Schraubenfedern 54 nach innen gedrückt. Dies hat in entsprechender Weise zur Folge, dass der Außenumfang des Betätigungskolbens 44 gegen die Druckplatte 37 der zweiten Kupplung K2 diese betätigend gedrückt wird.

Über die beiden Hydraulikflüss.igkeitskanäle 64 und 65 werden einerseits die Ausgleichsräume 69, 70 als auch der Kühlflüssigkeitsraum 73 mit Hydraulikflüssigkeit befüllt. Die Hydratlikflüssigkeit in den Ausgleichsräumen 69, 70 dient dazu, einen fliehkraftbedingten Hydraulikflüssigkeitsgegendruck zu erzeugen, welcher der fliehkraftbedingten Druckzunahme im jeweiligen Druckraum 71, 72 entgegen wirkt. Die Hydraulikflüssigkeit im Kühlflüssigkeitsraum 73 wird zur Kühlung der Lamellen 29 30 33, 34, 35, 36, 37 durch radial verlaufende Öffnungen im Innenlamellenträger.40 zu den Lamellen 29, 30, 33, 34, 35, 36, 37 geführt.

Die vorstehend im Detail beschriebenen Komponenten des Antriebsstranges sind wie folgt miteinander verbunden. Die Kurbelwelle 24 ist mit dem Innenumfang der Schwungmasse 21 verschraubt (Schraube 26, Bohrung 23). In der Nähe des Innenumfangs der Schwungmasse 21 ist ein Innenflansch 17 mit einer Außenverzahnung angebracht. Das Primärelement 14 trägt an seinem Innenumfang einen Primärflansch 15 mit einer Innenverzahnung. Die Außenverzahnung des Innenflanschs 17 der Schwungmasse 21 greift in der Art einer Steckverzahnung 16 in die Innenverzahnung des Primärflanschs 15 des Primärelements 14 des Torsionsschwingungsdämpfers 12 eine drehfeste Verbindung herstellend ein.

Die erste Halbschale 13 des Sekundärelements 11, 13 des Torsionsschwingungsdämpfers 12, bildet zugleich eine erste Halbschale eines Kupplungsgehäuses. Eine zweite Halbschale 18 des Kupplungsgehäuses ist außenumfangsseitig drehfest mit der ersten Halbschale 13 von Sekundärelement und Kupplungsgehäuse verbunden. Innenumfangsseitig besteht eine drehfeste Verbindung zur Kupplungsnabe 61 und über deren Umfangssteg 57 zum Innenlamellenträger 40 der Doppelkupplung 99.

Die Außenlamellenträger 1, 2 weisen Flansche 3, 4 auf, welche mittels Steckverzahnungen 7, 8 drehfest mit den beiden Getriebeeingangswellen 9, 10 verbunden sind.

Ein über die Kurbelwelle 24 eingeleitetes Drehmoment wird über die Schwungmasse 21 auf das Primärelement 14 des Torsionsschwingungsdämpfers übertragen. Die federelastische Kopplung zwischen Primärelement 14 und Sekundärelement 11, 13 dämpft unerwünschte Drehschwingungen. Das von unerwünschten Drehschwingungen weitgehend befreite Drehmoment wird weiter vom Sekundärelement 11, 13 auf die zweite Halbschale 18 des Kupplungsgehäuses und von dort weiter auf die Kupplungsnabe 61 und den gemeinsamen Innenlamellenträger 40 übertragen. Mittels der Doppelkupplung 99 kann das Drehmoment wahlweise über einen der beiden Außenlamellenträger 1, 2 auf eine der beiden Getriebeeingangswellen 9, 10 übertragen werden.

Der Vollständigkeit halber sei erwähnt, dass eine über die Kurbelwelle 24 eingeleitete Drehbewegung über ein an der Kupplungsnabe 61 angeordnetes Pumpenantriebszahnrad 68 auch eine hier nicht dargestellte Hydropumpe zur Bereitstellung des vorstehend erwähnten Hydraulikflüssigkeitsdrucks antreibt.

Es ist wünschenswert, die Doppelkupplung 99 mit den beiden Einzelkupplungen K1, K2, dem Kupplungsgehäuse 18, 13, den Außenlamellenträgern 1, 2, dem Innenlamellenträger 40, den Kolben-/Zylindereinheiten 43, 44, 49, 50, 51, 52, 53, 54, 55, 56 und der Kupplungsnabe 61 möglichst positionsgenau und unabhängig von axialen Bewegungen der Getriebewellen im Getriebe zu fixieren. Die Erfindung sieht zu diesem Zweck eine mit der Drehdurchführung 62 verschraubbare Festhaltemutter 80 vor, an welcher sich die Bestandteile der Doppelkupplung 99 beidseitig axial abstützen können.

Hierbei sind mehrere Szenarien vorstellbar, wie z. B.:
- erst wird die Drehdurchführung 62 ins Getriebe G montiert und anschließend die Kupplung 99 mittels der Festhaltemutter 80 mit der Drehdurchführung 62 verschraubt;
- erst wird die Drehdurchführung 62 mittels Festhaltemutter 80 mit der Kupplung 99 verschraubt und das Modul anschließend mittels der Drehdurchführung 62 im Getriebe G fixiert;
- die Drehdurchführung 62 wird bereits während der eigentlichen Kupplungsmontage mittels Festhaltemutter 80 im Modul fixiert, um dann wiederum als Gesamtmodul im Getriebe (mittels Drehdurchführung 62) fixiert zu werden.

Im vorliegenden Ausführungsbeispiel stützt sich die Kupplungsnabe 61 motorseitig mittelbar über eine Anlaufscheibe 85 an der Festhaltemutter 80 ab.

Durch die geschlossene Bauweise der Doppelkupplung 99, die die Festhaltemutter 80 klammerartig umgreift, stützt sich die Kupplung getriebeseitig über den Außenlamellenträger 2 mittelbar über eine Anlaufscheibe 86 getriebeseitig an der Festhaltemutter 80 ab. Damit wird (abgesehen von einem gewissen Kupplungsspiel) eine Verschiebung der Doppelkupplung 99 in beide Richtungen verhindert.

Die Festhaltemutter 80 weist im vorliegenden Ausführungsbeispiel eine Scheibe 92 auf, welche sich radial von dem Mantel 83 der Drehdurchführung 62 bis über den Innendurchmesser der Kupplungsnabe 61 erstreckt. Die Scheibe 92 mündet innenumfangsseitig in eine rohrförmige bzw. zylindrische Hülse 91, welche am Außenumfang ein Gewinde 81 aufweist. Dieses Gewinde 81 greift in ein am Innenumfang des Mantels 83 der Drehdurchführung 62 vorgesehenes Gewinde 82 ein. Auf diese Weise ist die Festhaltemutter 80 axial unverschieblich mit der Drehdurchführung 62 verbunden. Die Scheibe 92 verhindert ein axiales Verschieben der Kupplung gegenüber der Drehdurchführung 62.

Erfindungsgemäß kann die Verschraubung natürlich auch umgekehrt ausgeführt sein, d. h. die Festhaltemutter wird mit Innengewinde und das zur Befestigung dienende Element/Bauteil wird mit Außengewinde versehen.

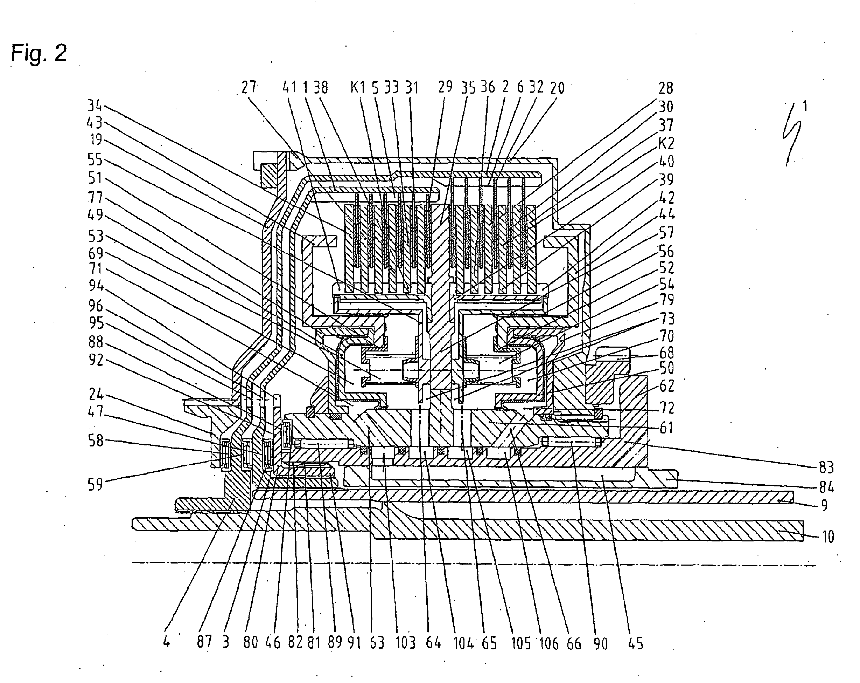

Die Figur 2 zeigt einen weiteren Antriebsstrang mit einer Doppelkupplung 99 im Axialhalbschnitt, bei der ein zweites Ausführungsbeispiel einer erfindungsgemäßen Axialsicherungseinrichtung 80 vorgesehen ist.

Auf der linken Seite der Zeichnungsfigur ist eine um eine Drehachse ax drehbare und als Antriebswelle dienende Kurbelwelle 24 angedeutet, welche mit einem Motor M oder dergleichen gekoppelt ist. Diese Seite stellt die Antriebsseite des Antriebsstrangs dar. Auf der rechten Seite des Zeichnungsblattes sind zwei um die Drehachse ax drehbare Getriebeeingangswellen, nämlich eine Zentral- oder Vollwelle 10 und eine Hohlwelle 9 zu sehen, welche mit einem hier nicht dargestellten Getriebe G oder dergleichen gekoppelt sind. Diese Seite stellt die Abtriebsseite des Antriebsstrangs dar. Der Antriebsstrang umfasst ferner die vorstehend genannte Doppelkupplung 99, mittels der die Abtriebswellen 9, 10 schaltbar mit der Antriebswelle 24 verbindbar sind.

Die Doppelkupplung 99 umfasst zwei einzelne Kupplungen K1, K2, welche axial benachbart zueinander angeordnet sind. Jede Kupplung K1, K2 umfasst jeweils einen Außenlamellenträger 1, 2 und einen gemeinsamen Innenlamellenträger 40. Die beiden Außenlamellenträger 1, 2 sind halbschalenförmig ausgebildet, wobei der erste Aüßenlainellenträger 1 den zweiten Außenlamellenträger 2 in axialer Richtung überragend umgreift. Der Innenlamellenträger 40 weist eine im wesentlichen zylinderförmige Gestalt auf und erstreckt sich über die axial verlaufenden Bereiche der halbschalenförmigen Außenlamellenträger 1, 2.

Die beiden Außenlamellenträger 1, 2 weisen Innenverzahnungen 5, 6 auf. Diese dienen zur axial verschieblichen aber im wesentlichen drehfesten Führung von im vorliegenden Fall jeweils sechs Lamellen 29, 30 mit entsprechenden Außenverzahnungen 31, 32. In entsprechender Weise sind am Außenumfang der den jeweiligen Außenlamellenträgern 1, 2 zugeordneten Innenlamellenträgerabschnitten des gemeinsamen Innenlamellenträgers 40 Außenverzahnungen 41, 42 angebracht, in denen jeweils sechs Innenverzahnungen 38, 39 aufweisende Lamellen 33, 36, axial verschieblich aber drehfest geführt sind. Die an den offenen äußeren Enden des gemeinsamen Innenlamellenträgers 40 befindlichen Lamellen werden auch als Druckplatten 34, 37 bezeichnet. Die äußeren Lamellen 29, 30, die inneren Lamellen 33, 36 sowie die beiden Druckplatten 34, 37 greifen wechselseitig in an sich bekannter Weise jeweils ein einer Kupplung K1, K2 zugeordnetes Lamellenpaket 27, 28 bildend ineinander. Beide Lamellenpakete 27, 28 stützen sich gegen eine gemeinsame Endplatte 35 ab, welche im vorliegenden Ausführungsbeispiel einstückig mit dem Innenlamellenträger 40, geformt ist.

Jeder Kupplung K1, K2 ist ein hydraulisch betätigbarer Betätigungskolben 43, 44 zugeordnet. Jeder dieser Betätigungskolben 43, 44 kann gegen eine der Druckplatten 34, 37 kraftübertragend und Reibschluss zwischen den einzelnen Lamellen 29, 30, 33, 34, 35, 36, 37 erzeugend und damit die jeweilige Kupplung K1, K2 betätigend gedrückt werden. Beide Kupplungen K1, K2 werden nach innen gerichtet betätigt, wobei die Reaktionskräfte gegen die gemeinsame Endplatte 35 wirken.

Neben den vorerwähnten Betätigungskolben 43, 44, mittels derer die jeweiligen Druckplatten 34, 37 der Lamellenpakete 27, 28 in Richtung der gemeinsamen Endplatten 35 verschoben werden können, sind jeder Kupplung K1, K2 jeweils ein Zylinder 77, 79, ein Druckkolben 49, 50, ein Kolben 51, 52, ein Ausgleichskolben 55, 56 sowie eine Mehrzahl in Umfangsrichtung angeordneter Schraubenfedern 53, 54 zugeordnet: Die jeweiligen Betätigungskolben 43, 44 stützen sich nach axial außen gegen die jeweiligen Druckkolben 49, 50 ab, welche axial verschieblich an den Zylindern 77, 79 und am Außenumfang einer Kupplungsnabe 61 geführt sind. Nach axial innen gerichtet stützen sich die Betätigungskolben 43, 44 gegen die Kolben 51, 52 ab. Diese wiederum stützen sich nach innen gerichtet gegen die Schraubenfedern 53, 54 ab. Die Schraubenfedern 53, 54 sind nach axial innen gerichtet gegen die Außenflächen der Kompensationskolben 55, 56 abgestützt. Diese Kompensationskolben 55, 56 stützen sich gegen einen den gemeinsamen Innenlamellenträger 40 tragenden Umfangssteg 57 der Kupplungsnabe 61 ab. Innenlamellenträger 40, Umfangssteg 57 und Kupplungsnabe 61 bilden im vorliegenden Ausführungsbeispiel eine einstückige Baueinheit.

Die Kupplungsnabe 61 ist mittels zweier Radial-Nadellager 89, 90 drehbar auf einer stehenden Drehdurchführung 62 um die Drehachse ax gelagert. Diese Drehdurchführung 62 umgreift die beiden Getriebeeingangswellen, die Hohlwelle 9 und die Vollwelle 10, koaxial.

Die Drehdurchführung 62 kann einteilig oder sowohl axial als auch radial mehrteilig ausgeführt sein. Im vorliegenden Fall ist die Drehdurchführung 62 zweiteilig ausgeführt. Sie besteht aus einem Mantel 83 und einer von diesem umschlossenen Buchse 84. Der Außenumfang der zylindermantelförmigen Buchse 84 weist vier in axialer Richtung verlaufende, unterschiedlich lange Längsnuten 45 auf. Der Mantel 83 weist korrespondierend zur Anordnung der vorerwähnten Längsnuten 45 vier in Umfangsrichtung verlaufende Nuten 103, 104, 105, 106 auf. Diese Umfangsnuten 103, 104, 105, 106 sind über (hier nicht dargestellte) radial verlaufende Öffnungen mit jeweils einer der entsprechenden Längsnuten 45 verbunden.

Korrespondierend zu den Umfangsnuten 103, 104, 105, 106 weist die Kupplungsnabe 61 vier im Wesentlichen radial und zum Teil axial geneigt verlaufende Öffnungen auf, welche nachfolgend als Hydraulikflüssigkeitskanäle 63, 64, 65 und 66 bezeichnet sind. Über die Nuten 45 in der Buchse 84, die Öffnungen und Nuten 103, 104, 105, 106 im Mantel 83 und die Hydraulikflüssigkeitskanäle 63, 64, 65, 66 in der Kupplungsnabe 61 erfolgt eine Versorgung der durch die Kolben 43, 44, 49, 50, 55, 56 gebildeten Volumina, nämlich den ersten Druckraum 71, den zweiten Druckraum 72, den ersten Ausgleichsraum 69, den zweiten Ausgleichsraum 70 sowie den Kühlflüssigkeitsraum 73 mit Hydraulikflüssigkeit.

Über den ersten Hydraulikflüssigkeitskanal 63 kann der erste Druckraum 71 mit Hydraulikflüssigkeit druckbeaufschlagt werden. Dieser Hydraulikflüssigkeitsdruck drückt den Druckkolben 49 und damit den Betätigungskolben 45 und den Kolben 51 entgegen dem Druck der Schraubenfedern 53 nach innen. Eine derartige Verschiebung des Betätigungskolbens 45 hat zur Folge, dass dessen Außenumfang gegen die Druckplatte 34 der ersten Kupplung K1 diese betätigend gedrückt wird.

In gleicher Weise kann über den vierten Hydraulikflüssigkeitskanal 66 der zweite Druckraum 72 mit Hydraulikflüssigkeit druckbeaufschlagt werden. Auf Grund dieses Hydraulikflüssigkeitsdrucks wird der Druckkolben 50 und damit der Betätigungskolben 44 und der Kolben 52 entgegen dem Druck der Schraubenfedern 54 nach innen gedrückt. Dies hat in entsprechender Weise zur Folge, dass der Außenumfang des Betätigungskolbens 44 gegen die Druckplatte 37 der zweiten Kupplung K2 diese betätigend gedrückt wird.

Über die beiden Hydraulikflüssigkeitskanäle 64 und 65 werden einerseits die Ausgleichsräume 69, 70 als auch der Kühlflüssigkeitsraum 73 mit Hydraulikflüssigkeit befüllt. Die Hydraulikflüssigkeit in den Ausgleichsräumen 69, 70 dient dazu, einen fliehkraftbedingten Hydraulikflüssigkeitsgegendruck zu erzeugen, welcher der fliehkraftbedingten Druckzunahme im jeweiligen Druckraum 71, 72 entgegen wirkt. Die Hydraulikflüssigkeit im Kühlflüssigkeitsraum 73 wird zur Kühlung der Lamellen 29 30 33, 34, 35, 36, 37 durch radial verlaufende Öffnungen im Innenlamellenträger 40 zu den Lamellenpaketen 27, 28 geführt.

Die vorstehend im Detail beschriebenen Komponenten des Antriebsstranges sind wie folgt miteinander verbunden. Die Kurbelwelle 24 ist mit einer ersten Seitenscheibe 19 eines aus zwei Halbschalen bestehenden Kupplungsgehäuses 19, 20 verbunden. Die zweite Halbschale 20 des Kupplungsgehäuses ist außenumfangsseitig drehfest mit der ersten Halbschale 19 des Kupplungsgehäuse verbunden. Innenumfangsseitig besteht eine drehfeste Verbindung zur Kupplungsnabe 61 und über deren Umfangssteg 57 zum gemeinsamen Innenlamellenträger 40 der Doppelkupplung 99. Die Außenlamellenträger 1, 2 weisen Flansche 3, 4 auf, welche mittels Steckverzahnungen 7, 8 drehfest mit den beiden Getriebeeingangswellen 9, 10 verbunden sind.

Ein über die Kurbelwelle 24 eingeleitetes Drehmoment wird über die beiden Halbschalen 19, 20 des Kupplungsgehäuses und von dort weiter auf die Kupplungsnabe 61 und den gemeinsamen Innenlamellenträger 40 übertragen: Mittels der Doppelkupplung 99 - kann das Drehmoment wahlweise über einen der beiden Außenlamellenträger 1, 2 auf eine der beiden Getriebeeingangswellen 9, 10 übertragen werden.

Der Vollständigkeit halber sei erwähnt, dass eine über die Kurbelwelle 24 eingeleitete Drehbewegung über ein an der Kupplungsnabe 61 angeordnetes Pumpenantriebszahnrad 68 auch eine hier nicht dargestellte Hydropumpe zur Bereitstellung des vorstehend erwähnten Hydraulikflüssigkeitsdrucks antreibt.

Im hier vorgestellten Ausführungsbeispiel nach der Figur 2 stützt sich die Kupplungsnabe 61 motorseitig mittelbar über ein Axialnadellager 88 an der Festhaltemutter 80 ab. Getriebeseitig stützt sich die Kupplung über den Außenlamellenträger 2 mittelbar über ein Axialnadellager 87 an der Festhaltemutter 80 ab.

Die Festhaltemutter 80 weist eine Scheibe 92 auf, welche sich radial von dem Mantel 83 der Drehdurchführung 62 bis über den Innendurchmesser der Kupplungsnabe 61 erstreckt. Die Scheibe 92 mündet innenumfangsseitig in eine zylindrische Hülse 91, welche am Außenumfang ein Gewinde 81 aufweist. Dieses Gewinde 81 greift in ein am Innenumfang des Mantels 83 der Drehdurchführung 62 vorgesehenes Innengewinde 82 ein. Auf diese Weise ist die Festhaltemutter 80 axial unverschieblich mit der Drehdurchführung 62 verbunden.

Die beiden in Achsrichtung ax weisenden Seitenflächen 85, 86 der Scheibe 92 der Festhaltemutter 80 dienen als Anlageflächen für Axialnadellager 87, 88..Gegen das eine dieser Axialnadellager 87 stützt sich eine radial verlaufende Anlagefläche 46 der Kupplungsnabe 61 ab, gegen die andere eine Anlagefläche des Außenlamellenträgers 1 der ersten Kupplung K1. Die beiden Außenlamellenträger 1, 2 der beiden Kupplungen K1, K2 sowie die erste Seitenscheibe 19 des Kupplungsgehäuses 19, 20 sind mittels weiterer Axialnadellager 58, 59 drehbar aneinander abgestützt.

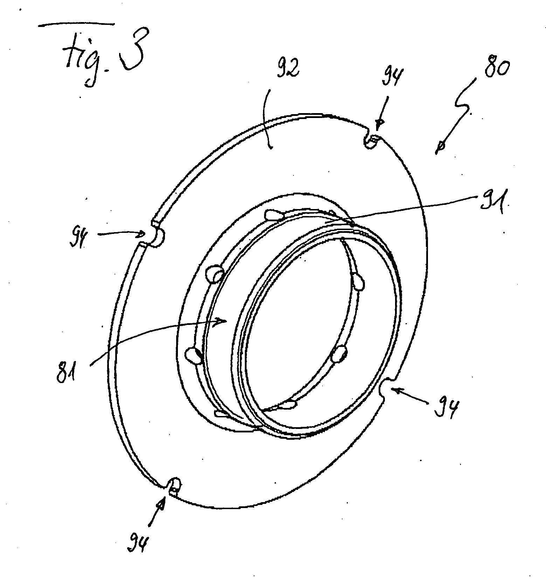

Die Festhaltemutter 80, welche in perspektivischer Darstellung in der Figur 3 dargestellt ist, weist eine Mitnahmekontur 94 auf, die durch entsprechende Aussparungen 95, 96 in den beiden Außenlamellenträgern 1, 2 der beiden Kupplungen K1, K2 von außen zugänglich ist. Im konkreten Ausführungsfall sind als Mitnahmekontur 94 vier am Außenumfang der Scheibe 92 eingebrachte Ausnehmungen 94 vorgesehen, in welche durch die Aussparungen 95, 96 in den Außenlamellenträgern 1, 2 ein Werkzeug eingeführt werden kann, um die Kupplungseinrichtung durch Drehen der Festhaltemutter 80 zu montieren bzw. zu demontieren.

### Bezugszeichenliste

- 1: erster Außenlamellenträger
- 2: zweiter Außenlamellenträger
- 3: erster Flansch
- 4: zweiter Flansch
- 5: Innenverzahnung
- 6: Innenverzahnung
- 7: Steckverzahnung
- 8: Steckverzahnung
- 9: Hohlwelle
- 10: Voll welle
- 11: zweite Halbschale/Sekundärelement
- 12: Torsionsschwingungsdämpfer
- 13: erste Halbschale/Sekundärelement/Kupplungsgehäuse
- 14: Primärelement/Halbschale
- 15: Primärflansch
- 17: Innenflansch
- 18: zweite Halbschale/Kupplungsgehäuse
- 19: Seitenscheibe/Halbschale
- 20: Halbschale
- 21: Schwungmasse
- 23: Bohrung
- 24: Kurbelwelle
- 26: Schraube
- 27: erstes Lamellenpaket
- 28: zweites Lamellenpaket
- 29: Außenlamelle
- 30: Außenlamelle
- 31: Außenverzahnung
- 32: Außenverzahnung
- 33: Innenlamelle
- 34: Druckplatte
- 35: gemeinsame Endplatte
- 36: Innenlamelle
- 37: Druckplatte
- 38: Innenverzahnung
- 39: Innenverzahnung
- 40: Innenlamellenträger
- 41: Außenverzahnung
- 42: Außenverzahnung
- 43: erster Betätigungskolben
- 44: zweiter Betätigungskolben
- 45: Längsnut
- 46: Anlagefläche
- 47: Anlagefläche
- 49: Druckkolben
- 50: Druckkolben
- 51: Kolben
- 52: Kolben
- 53: Schraubenfeder
- 54: Schraubenfeder
- 55: Kompensationskolben
- 56: Kompensationskolben
- 57: Umfangssteg
- 58: Axialnadellager
- 59: Axialnadellager
- 61: Kupplungsnabe
- 62: Drehdurchführung
- 63: Hydraulikflüssigkeitskanal
- 64: Hydraulikflüssigkeitskanal
- 65: Hydraulikflüssigkeitskanal
- 66: Hydraulikflüssigkeitskanal
- 68: Pumpenantriebszahnrad
- 69: erster Hydraulikflüssigkeitsausgleichsraum
- 70: zweiter Hydraulikflüssigkeitsausgleichsraum
- 71: erster Druckraum
- 72: zweiter Druckraum
- 73: Kühlflüssigkeitsraum
- 74: Kupplungsglocke
- 77: Zylinder
- 79: Zylinder
- 80: Festhaltemutter
- 81: Gewinde
- 82: Gewinde
- 83: Mantel
- 84: Buchse
- 85: Anlaufscheibe
- 86: Anlaufscheibe
- 87: Axialnadellager
- 88: Axialnadellager
- 89: Radialnadellager
- 90: Radialnadellager
- 91: Hülse
- 92: Scheibe
- 93: Umfangssteg
- 94: Mitnahmekontur / Ausnehmung
- 95: Aussparung
- 96: Aussparung
- 99: Doppelkupplung
- 100: Federpaket
- 101: Halbschale
- 102: Halbschale
- 103: Umfangsnut
- 104: Umfangsnut
- 105: Umfangsnut
- 106: Umfangsnut
- K1: erste Kupplung
- K2: zweite Kupplung
- M: Motor
- G: Getriebe
- ax: Drehachse

## Patentansprüche

1. Kupplungseinrichtung (99), insbesondere Doppelkupplungseinrichtung, mit einer Einrichtung zur axialen Positionierung der Kupplungseinrichtung (99) an einer Drehdurchführung (62), um die die Kupplungseinrichtung (99) um eine Drehachse (ax) drehbar gelagert ist, bei welcher
eine Festhaltemutter (80) vorgesehen ist, welche koaxial mit der Drehdurchführung (62) verschraubt ist und an welcher die Kupplungseinrichtung (99) mittelbar oder unmittelbar in axialer Richtung (ax) abgestützt ist, **dadurch gekennzeichnet, dass** die Kupplungseinrichtung (99) die Festhaltemutter (80) beidseitig umgreift.

2. Kupplungseinrichtung (99) nach Anspruch 1,
**dadurch gekennzeichnet, dass** sie im wesentlichen unverschiebbar an der Festhaltemutter (80) abgestützt ist.

3. Kupplungseinrichtung (99) nach einem der Ansprüche 1 oder 2,
**dadurch gekennzeichnet, dass** sie mit einem vorgegebenen Kupplungsspiel an der Festhaltemutter (80) abgestützt ist.

4. Kupplungseinrichtung (99) nach einem der vorangegangenen Ansprüche,
**dadurch gekennzeichnet, dass** die Festhaltemutter (80) eine Anlagefläche aufweist, an welcher ein Gleitlager, insbesondere ein Axialnadellager (87, 88) und/oder eine Anlaufscheibe (85,86) axial abgestützt ist.

5. Kupplungseinrichtung (99) nach einem der vorangegangenen Ansprüche,
**dadurch gekennzeichnet, dass** die Festhaltemutter (80) eine Mitnahmekontur (94) aufweist, die insbesondere durch entsprechende Aussparungen (95, 96) in umliegenden Kupplungskomponenten (1, 2) von außen zugänglich ist und welche eine Montage oder Demontage der Kupplungseinrichtung (99) ermöglicht.

6. Kupplungseinrichtung (99) nach einem der vorangegangenen Ansprüche,
**dadurch gekennzeichnet, dass** die Drehdurchführung (62) mindestens einen Fluidkanal (45, 103, 104, 105, 106) aufweist, über den ein zur Kupplungskühlung, zur Kupplungsbetätigung und/oder in sonstiger Weise für den Betrieb der Kupplungseinrichtung (99) erforderliches Fluid, insbesondere Kühlöl, Drucköl, Fliehöl, zu- und/oder abführbar ist.

## Claims

1. Clutch device (99), in particular double clutch device, having a device for axially positioning the clutch device (99) on a rotary feedthrough (62) about which the clutch device (99) is mounted so as to rotate about a rotational axis (ax), in which a securing nut (80) is provided which is screwed coaxially to the rotary feedthrough (62) and on which the clutch device (99) is indirectly or directly supported in the axial direction (ax), **characterized in that** the clutch device (99) engages around the securing nut (80) on both sides.

2. Clutch device (99), according to Claim 1, **characterized in that** it is supported in an essentially non-slideable fashion on the securing nut (80).

3. Clutch device (99) according to one of Claims 1 or 2, **characterized in that** it is supported on the securing nut (80) with a predefined clutch play.

4. Clutch device (99) according to one of the preceding claims, **characterized in that** the securing nut (80) has a stop face on which a sliding bearing, in particular an axial needle bearing (87, 88) and/or a stop disc (85, 86) is axially supported.

5. Clutch device (99) according to one of the preceding claims, **characterized in that** the securing nut (80) has an entraining contour (94) which is accessible from the outside, in particular, through corresponding cutouts (95, 96) in surrounding clutch components (1, 2), and which permits mounting or dismounting of the clutch device (99).

6. Clutch device (99) according to one of the preceding claims, **characterized in that** the rotary feedthrough (62) has at least one fluid duct (45, 103, 104, 105, 106) via which a fluid, in particular cooling oil, pressure oil, centrifugal oil, which is necessary for cooling the clutch, for activating the clutch and/or for the operation of the clutch device (99) in some other way, can be fed in and/or carried away.

## Revendications

1. Système d'embrayage (99), en particulier système d'embrayage double, avec un dispositif de positionnement axial du système d'embrayage sur une traversée rotative (62), autour de laquelle le système d'embrayage (99) est monté de façon rotative autour d'un axe de rotation (ax), dans lequel il est prévu un écrou d'immobilisation (80), qui est vissé en position coaxiale à la traversée rotative (62) et sur lequel le système d'embrayage (99) est appuyé indirectement ou directement en direction axiale (ax), **caractérisé en ce que** le système d'embrayage (99) entoure sur les deux côtés l'écrou d'immobilisation (80).

2. Système d'embrayage (99) selon la revendication 1, **caractérisé en ce qu'**il est appuyé de manière essentiellement inamovible sur l'écrou d'immobilisation (80).

3. Système d'embrayage (99) selon l'une quelconque des revendications 1 ou 2, **caractérisé en ce qu'**il est appuyé sur l'écrou d'immobilisation (80) avec un jeu d'embrayage prédéterminé.

4. Système d'embrayage (99) selon l'une quelconque des revendications précédentes, **caractérisé en ce que** l'écrou d'immobilisation (80) présente une face d'appui, sur laquelle un palier lisse, en particulier une butée à aiguilles (87, 88) et/ou une plaque de butée (85, 86) est appuyée axialement.

5. Système d'embrayage (99) selon l'une quelconque des revendications précédentes, **caractérisé en ce que** l'écrou d'immobilisation (80) présente un contour d'entraînement (94), qui est accessible de l'extérieur en particulier par des évidements correspondants (95, 96) dans des composants d'embrayage (1, 2) périphériques et qui permet un montage ou un démontage du système d'embrayage (99).

6. Système d'embrayage (99) selon l'une quelconque des revendications précédentes, **caractérisé en ce que** la traversée rotative (62) présente au moins un canal de fluide (45, 103, 104, 105, 106), par lequel un fluide nécessaire pour le refroidissement de l'embrayage, pour l'actionnement de l'embrayage et/ou d'une autre manière pour le fonctionnement du système d'embrayage (99), en particulier de l'huile de refroidissement, de l'huile sous pression, de l'huile centrifugée, peut être amené et/ou évacué.
